## Europäisches Patentamt
## European Patent Office
## Office européen des brevets

(19)

(11) Veröffentlichungsnummer: **0 159 451**
**B1**

(12)                    # EUROPÄISCHE PATENTSCHRIFT

(45) Veröffentlichungstag der Patentschrift:
**16.03.88**

(51) Int. Cl.⁴: **E 04 B 2/86,** E 04 B 1/76

(21) Anmeldenummer: **84810187.9**

(22) Anmeldetag: **16.04.84**

(54) Schalungseinlage zur Herstellung von in bezug auf Wärmedämmung relativ isolierten Decken-Wandübergängen bei Verwendung von Beton als Baumaterial für Decke und Wand.

(43) Veröffentlichungstag der Anmeldung:
**30.10.85 Patentblatt 85/44**

(45) Bekanntmachung des Hinweises auf die Patenterteilung:
**16.03.88 Patentblatt 88/11**

(84) Benannte Vertragsstaaten:
**AT CH DE FR IT LI LU NL SE**

(56) Entgegenhaltungen:
**EP-A-0 070 770**
**DE-C-511 365**
**GB-A-1 439 282**

(73) Patentinhaber: **Zumbrunn & Junker AG**
**Ingenieurbüro für Hoch- und Tiefbauten,**
**Schiltwiesenweg 7, CH- 8404 Winterthur (CH)**

(72) Erfinder: **Zumbrunn, Alfred, Weinbergstrasse 27,**
**CH- 8353 Elgg (CH)**

(74) Vertreter: **Wenger, René, Hepp & Partner AG**
**Marktgasse 18, CH- 9500 Wil (CH)**

EP 0 159 451 B1

## Beschreibung

Die Erfindung betrifft eine Schalungseinlage für die Herstellung von isolierten Decken-Wand-Uebergängen an Betonbauten sowie ein Verfahren zum Herstellen derartiger Decken-Wand-Uebergänge. An diesen Übergangsstellen liegt die betonierte Decke bekanntlich auf der Seitenwand bzw. auf einem Teil der Seitenwand auf, was gewisse technische Probleme für eine optimale Wärmeisolation verursacht. Die heute einfachste und üblichste Art, Massivdecken auf Massivwänden zu lagern, besteht darin, dass die Wand in einem ersten Arbeitsgang bis auf die Höhe der Deckenuntersicht hergestellt wird. Hernach wird auf der Wandaussenseite eine Schalung als Begrenzungsfläche des Deckenmaterials während der Einbauphase angebracht. Nach Erhärtung des Deckenmaterials kann darauf eine übliche einschalige oder zweischalige Fassadenkonstruktion erstellt werden.

Durch die EP-A-0 070 770 ist bereits eine Anordnung für die Herstellung von Decken-Wand-Uebergängen bekannt geworden, bei der beim Erstellen der Wand vorfabrizierte, taschenartige Hohlkörper in die Wand eingelassen werden, welche später als Auflagenischen für die Verankerung der Decke dienen. Die in der Wand verbleibenden Hohlkörper sind auf der Innenseite mit einer wärmedämmenden Schicht versehen. Ein in vertikaler Richtung durch den Hohlkörper geschobener Stab dient zur Fixierung der Eisenarmierung in der Decke. Dieses bekannte System ist einerseits mit hohen Kosten verbunden und lässt keine variable Ausgestaltung der Auflagenischen zu. Für jeden Typ einer Auflagenische muss praktisch ein separater Hohlkörper vorfabriziert werden.

Es ist daher eine Aufgabe der Erfindung, eine Schalungseinlage der eingangs genannten Art zu schaffen, mit deren Hilfe die Auflagenischen bei optimaler Wärmeisolation einfach und kostengünstig geformt werden können. Ausserdem soll das Bauschadenrisiko entscheidend vermindert werden. Ausserdem soll ein Verfahren geschaffen werden, mit welchem ohne spezielle Fachkenntnisse die Decken-Wand-Uebergänge gebildet werden können. Diese Aufgabe wird erfindungsgemäss mit einer Schalungseinlage gelöst, welche die Merkmale im Anspruch 1 aufweist. Das erfindungsgemässe Verfahren ist durch die Merkmale im Anspruch 7 gekennzeichnet. Die Anordnung der wärmedämmenden Schicht und der mechanisch belastbaren Schicht auf dem Verdrängungskörper erlauben eine äusserst rationelle Arbeitsweise, da der Verdrängungskörper auf einfachste Weise an der Verschalung fixiert werden kann und ebenso einfach zusammen mit der Verschalung wieder entfernt werden kann. Die mechanisch belastbare Schicht übernimmt die Aufgabe der Kräfteübertragung, wobei trotzdem noch eine gewisse Isolation gewährleistet-ist. Die wärmedämmende Schicht, welche mechanisch nicht belastet wird, übernimmt die eigentliche Isolationsaufgabe. Der Verdrängungskörper kann aus einem relativ preiswerten Material wie Holz, Kunststoff oder dergleichen gefertigt sein, da er lediglich die Aufgabe hat, beim Aufgiessen der Wand eine Auflagenische zu bilden.

Weitere Vorteile und Einzelmerkmale der Erfindung ergeben sich aus der nachfolgenden Beschreibung und aus dem Ausführungsbeispiel, das in den Figuren dargestellt ist. Es zeigen:

Figur 1 einen Horizontalschnitt durch eine erfindungsgemässe Schalungseinlage,

Figur 2 einen Querschnitt durch die Ebene A-A gemäss Figur 1 in vergrösserter Darstellung,

Figur 3 einen Querschnitt durch die Ebene B-B gemäss Figur 1 in vergrösserter Darstellung,

Figur 4 einen Horizontalschnitt durch einen Decken-Wand-Uebergang,

Figur 5 einen Querschnitt durch die Ebene C-C gemäss Figur 4,

Figur 6 einen Querschnitt durch die Ebene D-D gemäss Figur 4,

Figur 7 einen Querschnitt durch eine Schalung mit eingelegter Schalungseinlage,

Figur 8 einen Querschnitt durch eine Schalung ausserhalb der Schalungseinlage, und

Figur 9 einen Querschnitt durch den fertigen Decken-Wand-Uebergang.

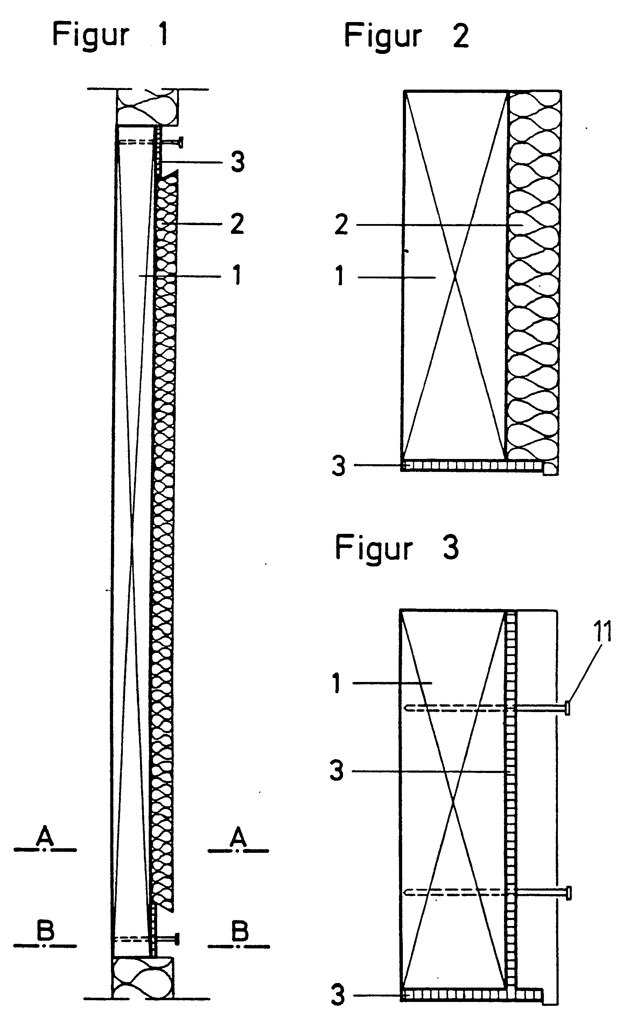

Wie in den Figuren 1 bis 3 dargestellt, besteht die erfindungsgemässe Schalungseinlage aus einem etwa prismatisch ausgebildeten Verdrängungskörper 1, der aus Holz, Spanplatte, Kunststoff oder ähnlichen Materialien gefertigt sein kann. Auf einer Seite des Verdrängungskörpers ist eine wärmedämmende Schicht 2 angeordnet, die beispielsweise aus einer handelsüblichen Wärmedämmplatte gefertigt sein kann. Die wärmedämmende Schicht 2 kann auf geeignete Weise auf dem Verdrängungskörper 1 aufgezogen sein, indem sie beispielsweise angeklebt ist. Die wärmedämmende Schicht 2 erstreckt sich nicht über die gesamte Länge des Verdrängungskörpers 1. An den beiden Endabschnitten des Verdrängungskörpers in der Ebene der wärmedämmenden Schicht und auf der Unterseite des Verdrängungskörpers 1 ist eine mechanisch belastbare Schicht aus elastischem Material 3 angeordnet und auf ähnliche Weise wie die wärmedämmende Schicht 2 mit dem Verdrängungskörper 1 verbunden. Diese elastische Schicht 3 kann beispielsweise aus Gummi gefertigt sein. Sie dient dazu, horizontale und vertikale Lasten zwischen Decke und Wand zu übertragen.

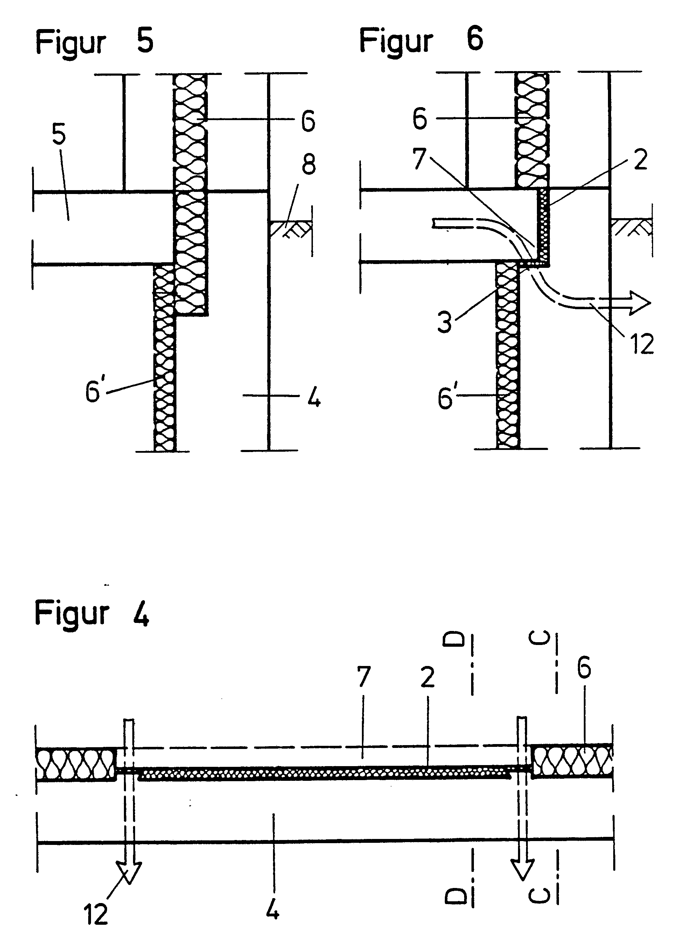

In den Figuren 4 bis 6 ist die Konstruktionsart des Decken-Wand-Ueberganges unter Verwendung der erfindungsgemässen Schalungseinlage dargestellt. Wie aus Figur 4 ersichtlich ist, schliesst sich auf beiden Seiten der durch den Verdrängungskörper gebildeten Auflagenische 7 eine Wandisolation 6 an. Ausserhalb der Auflagenische ist die Decke 5 und die Wand 4 vollkommen durch die Wandisolation 6 bzw. 6' isoliert, wie insbesondere aus Figur 5 ersichtlich ist. Im Bereich der Auflagenische 7 erfolgt die Isolation stirnseitig durch die wärmedämmende Schicht 2 und an der eigentlichen Auflagestelle im begrenzten Ausmass auch an der elastischen Schicht 3. Die notwendige kräfteübertragende Kontaktfläche zwischen Decke und Wand ist auf das statisch zwingende Minimum reduziert. Es handelt sich dabei um diejenigen Flächen, an denen die elastische Schicht 3 vorgesehen ist. An diesen im Vergleich zur übrigen Isolation schlechter isolierten Stellen findet jedoch nur ein stark reduzierter Energieverlust statt, wie durch die Pfeile 12 angedeutet wird.

Weil die Wand 4 im ersten Arbeitsgang nicht nur bis zur Unterseite der Decke, sondern mindestens bis auf die Höhe der Deckenoberfläche hergestellt werden kann, entfällt die Arbeitsfuge zwischen Decke und Wand und damit auch das Risiko des Wassereindringens. Auch wenn das Erdreich 8 bis zur Höhe der Decke 5 aufgeschüttet wird, können somit keine Bauschäden entstehen.

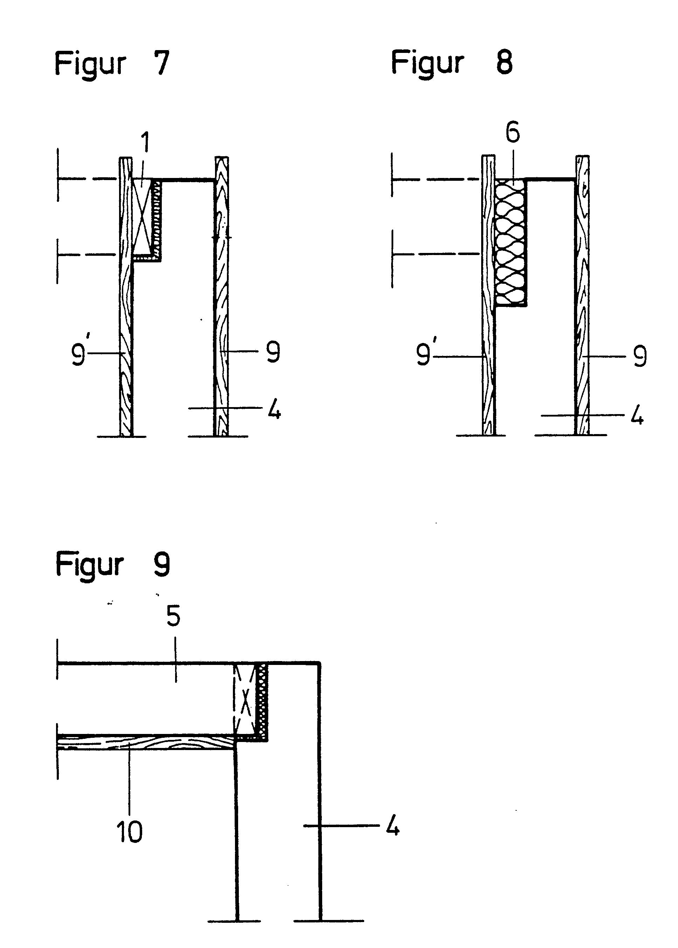

Die Figuren 7 bis 9 zeigen das Verfahren zur Herstellung des Decken-Wand-Ueberganges bei Verwendung der erfindungsgemässen Schalungseinlage. Durch die Erstellung der Wand 4 bis auf die Höhe der Deckenoberfläche entfallen die bei den heutigen Ausführungsarten erforderlichen, aufwendigen und risikoerhöhenden Stirnschalungen. Die Wandschalungen 9 und 9' werden bis über die Höhe der späteren Decke 5 erstellt. An der deckenseitigen Wandschalung 9' wird mit Hilfe der in Figur 3 dargestellten Nägel 11 die Schalungseinlage mit dem Verdrängungskörper 1 befestigt. In Figur 8 ist analog zur Figur 5 die Ausbildung ausserhalb der Schalungseinlage bzw. ausserhalb der vorgesehenen Auflagenische dargestellt. Die Wandisolation 6 wird dort ebenfalls auf geeignete Weise an der deckenseitigen Wandschalung 9' befestigt. Nach diesen Vorbereitungsarbeiten wird die Wand 4 mit Beton aufgegossen.

Nach dem Erhärten des Betons werden die Wandschalungen 9 und 9' entfernt. Zusammen mit der Wandschalung 9' wird auch der Verdrängungskörper 1 von der wärmedämmenden Schicht 2 bzw. von der elastischen Schicht 3 abgelöst. Dagegen verbleibt die Wandisolation 6 in der Wand 4.

Nach der Fertigstellung der Wand 4 mit den nun darin angeordneten Auflagenischen und Isolationskörpern wird die Deckenschalung 10 aufgebaut. Jetzt kann die Decke 5 aufgegossen werden, welche sich in die Auflagenische 7 hinein erstreckt.

**Patentansprüche**

1. Schalungseinlage für die Herstellung von isolierten Decken-Wandübergängen an Betonbauten, dadurch gekennzeichnet, dass sie einen Verdrängungskörper (1) aufweist, an dem eine wärmedämmende Schicht (2) und seitlich an diese anschließend eine mechanisch belastbare Schicht aus elastischem Material (3) derart lösbar befestigt ist, dass der Verdrängungskörper (1) nach dem Erhärten der Betonfüllung in der Schalung zusammen mit letzterer entfernbar ist, wobei die wärmedämmende Schicht (2) und die elastische Schicht (3) in der Betonfüllung verbleiben.

2. Schalungseinlage nach Anspruch 1, dadurch gekennzeichnet, dass der Verdrängungskörper (1) etwa prismatisch ausgebildet ist, dass an seiner Begrenzungsfläche, welche an der aufzugiessenden Wand die Stirnseite der Decke definiert, eine wärmedämmende Schicht (2) angeordnet ist, die an beiden Enden des Verdrängungskörpers von einer belastbaren Schicht aus elastischem Material (3) begrenzt ist, und dass an der Begrenzungsfläche, welche an der aufzugiessenden Wand die Auflagefläche der Decke definiert, ebenfalls eine belastbare Schicht aus elastischem Material (3) angeordnet ist.

3. Schalungseinlage nach Anspruch 1 oder 2, dadurch gekennzeichnet, dass der Verdrängungskörper (1) aus Holz gefertigt ist.

4. Schalungseinlage nach Anspruch 1 oder 2, dadurch gekennzeichnet, dass der Verdrängungskörper (1) aus Spanplatte gefertigt ist.

5. Schalungseinlage nach Anspruch 1 oder 2, dadurch gekennzeichnet, dass der Verdrängungskörper (1) aus Kunststoff gefertigt ist.

6. Schalungseinlage nach einem der Ansprüche 1 bis 5, dadurch gekennzeichnet, dass die elastische Schicht (3) aus Gummi gefertigt ist.

7. Verfahren zum Herstellen von isolierten Decken-Wand-Uebergängen an Betonbauten, dadurch gekennzeichnet, dass auf Deckenhöhe ein Verdrängungskörper (1) mit einer wärmedämmenden Schicht (2) und seitlich an diese anschließend mit einer mechanisch belastbaren Schicht aus elastischem Material (3) auf der Innenseite der Wandschalung befestigt wird, dass die Wand bis in den Bereich der Deckenoberseite ausbetoniert wird, und dass nach dem Erhärten der Wand der Verdrängungskörper mit der Schalung entfernt wird, wobei die wärmedämmende Schicht (2) und die belastbare Schicht aus elastischem Material (3) abgelöst werden und an der Wand zurückbleiben.

## Claims

1. A shuttering insert for the production of insulated ceiling-wall junctions on concrete structures characterised in that it has a displacement body (1) to which a heat-insulating layer (2) and, laterally adjoining same, a layer of elastic material (3), which can carry a mechanical loading, is releasably fixed in such a way that, after hardening of the concrete filling in the shuttering, the displacement body (1) can be removed together with the shuttering, the heat-insulating layer (2) and the elastic layer (3) remaining in the concrete filling.

2. A shuttering insert according to claim 1 characterised in that the displacement body (1) is of a substantially prismatic configuration, that a heat-insulating layer (2) is arranged at the displacement body boundary surface which defines the end of the ceiling at the wall to be poured, which layer (2) is delimited at both ends of the displacement body by a layer of elastic material (3), which is capable of bearing a load, and that a layer of elastic material (3), which is capable of bearing a load, is also arranged at the boundary surface which defines the support surface of the ceiling, on the wall to be poured.

3. A shuttering insert according to claim 1 or claim 2 characterised in that the displacement body (1) is made from wood.

4. A shuttering insert according to claim 1 or claim 2 characterised in that the displacement body (1) is made from chipboard.

5. A shuttering insert according to claim 1 or claim 2 characterised in that the displacement body (1) is made from plastics material.

6. A shuttering insert according to one of claims 1 to 5 characterised in that the elastic layer (3) is made from rubber.

7. A process for the production of insulated ceiling-wall junctions on concrete structures characterised in that at ceiling height a displacement body (1) with a heat-insulating layer (2) and, laterally adjoining same, a layer of elastic material (3) which is capable of bearing a mechanical load, is fixed on the inside of the wall shuttering, that the wall is concreted into the region of the top side of the ceiling, and that after hardening of the wall the displacement body is removed with the shuttering, wherein the heat-insulating layer (2) and the layer of elastic material (3), which is capable of bearing a load, are stripped off and remain behind on the wall.

## Revendications

1. Elément rapporté de coffrage pour la réalisation de raccordements isolés entre dalle et mur dans des ouvrages en béton, caractérisé en ce qu'il comprend un élément de refoulement (1) sur lequel une couche d'isolation thermique (2) et une couche résistant aux contraintes mécaniques (3), faite d'une matière élastique et qui se raccorde latéralement à la première couche, sont fixées de façon détachable de telle manière que, après le durcissement du béton coulé dans le coffrage, l'élément de refoulement (1) puisse être enlevé avec ce coffrage, tandis que la couche d'isolation thermique (2) et la couche élastique (3) restent dans le béton.

2. Elément rapporté de coffrage selon la revendication 1, caractérisé en ce que l'élément de refoulement (1) est de configuration à peu près prismatique, en ce qu'à sa surface limite qui définit la face frontale de la dalle au droit du mur à couler, est disposée une couche d'isolation thermique (2) qui est limitée, aux deux extrémités de l'élément de refoulement, par une couche en matière élastique (3) résistant aux contraintes mécaniques, et en ce que, contre la surface limite qui définit la surface d'appui de la dalle sur le mur à couler, est également disposée une couche en matière élastique (3) résistant aux contraintes mécaniques.

3. Elément rapporté de coffrage selon la revendication 1 ou la revendication 2, caractérisé en ce que l'élément de refoulement (1) est fabriqué en bois.

4. Elément rapporté de coffrage selon la revendication 1 ou la revendication 2, caractérisé en ce que l'élément de refoulement (1) est constitué par un panneau de bois reconstitué.

5. Elément rapporté de coffrage selon la revendication 1 ou la revendication 2, caractérisé en ce que l'élément de refoulement (1) est fabriqué en matière plastique.

6. Elément rapporté de coffrage selon l'une des revendications 1 à 5, caractérisé en ce que la couche élastique (3) est réalisée en caoutchouc.

7. Procédé de formation de raccordements isolés entre dalle et mur dans des ouvrages en béton, caractérisé en ce qu'au niveau de la dalle, on fixe à la face intérieure du coffrage de mur un élément de refoulement (1) portant une couche d'isolation thermique (2) et une couche en matière élastique (3) résistant aux contraintes mécaniques et qui se raccorde latéralement à la première couche, en ce qu'on bétonne le mur jusqu'au voisinage de la face supérieure de la dalle et en ce que, après le durcissement du mur, on enlève l'élément de refoulement avec le coffrage, auquel cas la couche d'isolation thermique (2) et la couche en matière élastique (3) résistant aux contraintes mécaniques s'en détachent et restent fixées au mur.

0 159 451

Figur 1

Figur 2

Figur 3

Figur 5

Figur 6

Figur 4

Figur 7

Figur 8

Figur 9